# EUROPÄISCHE PATENTSCHRIFT

(11) **EP 3 458 219 B1**
(45) Veröffentlichungstag und Bekanntmachung des Hinweises auf die Patenterteilung: **22.01.2020**
(21) Anmeldenummer: 18722504.0
(22) Anmeldetag: 04.05.2018
(51) Int. Cl.: B23G 5/20

(54) **VERFAHREN ZUR ERZEUGUNG EINER GEWINDEBOHRUNG SOWIE GEWINDEBOHR-WERKZEUG**
METHOD FOR PRODUCING A THREADED BOREHOLE AND TAPPING TOOL
PROCÉDÉ DE CRÉATION D'UN TROU TARAUDÉ AINSI QU'OUTIL DE TARAUDAGE

(30) Priorität: 05.08.2017 DE 102017007419
(43) Veröffentlichungstag der Anmeldung: 27.03.2019
(73) Patentinhaber: Audi AG, 85045 Ingolstadt (DE)
(72) Erfinder: KOPTON, Peter, 85092 Kösching (DE)
(86) Internationale Anmeldenummer: PCT/EP2018/061452
(87) Internationale Veröffentlichungsnummer: WO 2019/029850

(56) Entgegenhaltungen:
- EP-A1- 0 767 024
- EP-A1- 0 953 396
- DE-U- 1 818 609
- DE-U1- 7 922 782
- GB-A- 2 335 878

## Beschreibung

Die Erfindung betrifft ein Verfahren zur Erzeugung einer Gewindebohrung, insbesondere ein Gewindesackloch, nach dem Oberbegriff des Patentanspruches 1 sowie ein Gewindebohr-Werkzeug nach dem Oberbegriff des Anspruches 11.

Ein derartiges Verfahren geht beispielsweise aus der GB 2 335 878 A und ein derartiges Gewindebohr-Werkzeug geht beispielsweise aus der DE 18 18 609 U hervor.

In einem sogenannten Einschuss-Gewindebohr-Prozess wird mit einem Einschuss-Gewindebohr-Werkzeug sowohl eine Kernbohrung als auch ein Innengewinde-Schneiden in einem gemeinsamen Werkzeughub durchgeführt. Das Einschuss-Gewindebohr-Werkzeug weist an seiner Bohrerspitze eine Hauptschneide und ein in einer Gewindebohr-Richtung nacheilendes Gewindeprofil mit zumindest einem Gewinde-Schneidzahn auf. In dem Verfahren erfolgen zunächst der Gewindebohr-Hub und anschließend ein dazu gegenläufiger Reversier-Hub. Im Gewindebohr-Hub erzeugt einerseits die Werkzeug-Hauptschneide die Kernlochbohrung und andererseits das Werkzeug-Gewindeprofil das Innengewinde an der Innenwandung der Kernlochbohrung bis zum Erreichen einer nutzbaren Soll-Gewindetiefe. Hierzu wird im Gewindebohr-Hub das Gewindebohr-Werkzeug bei einem Gewindebohr-Vorschub mit dazu synchronisierter Gewindebohr-Drehzahl betrieben. Im nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub sowie dazu synchronisierter Reversier-Drehzahl. Dadurch ist gewährleistet, dass das Gewindeprofil des Gewindebohr-Werkzeugs im Gewindegang des Innengewindes belastungsfrei aus der Gewindebohrung bewegt wird.

Im obigen Verfahren werden im Gewindebohr-Hub Späne erzeugt, die in einer zur Gewindebohr-Richtung gegenläufigen Spanabfuhrrichtung aus der Gewindebohrung gefördert werden. Dabei kollidieren die sich in der Spanabfuhrrichtung bewegenden Späne mit den spänezugewandten Gewindeflanken des Innengewindes. An den spänezugewandten Gewindeflanken des Innengewindes kann es daher zu einem Materialabrieb kommen, der zu Fehlstellen im Innengewinde führt. Solche Fehlstellen können wiederum das Setzverhalten eines in das Innengewinde verschraubten Schraubelementes beeinträchtigen.

Aus der DE 38 80 394 T2 ist ein kombiniertes Werkzeug zum Bohren eines Loches und zum Gewindeschneiden bekannt. Mit dem Gewindebohr-Werkzeug wird zunächst eine Kernlochbohrung erzeugt. Anschließend wird das Gewindebohr-Werkzeug mit seiner Werkzeugachse in einer Kreisbahn um die Bohrungsachse bewegt, und zwar unter Rotation des Gewindebohr-Werkzeuges, wodurch das Gewindeprofil ein Innengewinde in der Kernlochbohrung erzeugt. Im Wesentlichen dasselbe Verfahren ist auch aus der DE 39 39 795 T2 und aus der US 5 678 962 bekannt.

Die Aufgabe der Erfindung besteht darin, ein Verfahren zur Erzeugung einer Gewindebohrung in einem Werkstück sowie ein Gewindebohr-Werkzeug bereitzustellen, mit dem eine dauerhaft betriebssichere Schraubverbindung gewährleistet ist.

Die Aufgabe ist durch die Merkmale des Patentanspruches 1 oder 11 gelöst. Bevorzugte Weiterbildungen der Erfindung sind in den Unteransprüchen offenbart.

Die Erfindung beruht auf dem Sachverhalt, dass im Gewindebohr-Hub die abzuführenden Späne mit spänezugewandten Gewindeflanken des Innengewindes kollidieren und dieses gegebenenfalls beschädigen können. Vor diesem Hintergrund werden gemäß dem kennzeichnenden Teil des Patentanspruches 1 im Gewindebohr-Hub die spänezugewandten Gewindeflanken des Innengewindes noch nicht auf ein Fertigmaß hergestellt, sondern vielmehr mit einem Flanken-Aufmaß hergestellt. Auf diese Weise wird an den spänezugewandten Gewindeflanken eine Kollisionskontur bereitgestellt, mit der die abzuführenden Späne kollidieren.

Erst in einem, dem Gewindebohr-Hub nachgeschalteten Endbearbeitungsschritt kann das Flanken-Aufmaß von den spänezugewandten Gewindeflanken des Innengewindes bis auf das Fertigmaß abgetragen werden. Bevorzugt findet dieser Endbearbeitungsschritt im Reversier-Hub statt, bei dem das in der Reversierrichtung aus der Gewindebohrung geführte Werkzeug-Gewindeprofil das Flanken-Aufmaß von den Späne zugewandten Gewindeflanken bis auf das Fertigmaß abträgt.

Im Gewindebohr-Hub sind der Gewindebohr-Vorschub und die damit synchronisierte Gewindebohr-Drehzahl so aufeinander abgestimmt, dass der erzeugte Gewindegang des Innengewindes mit einer vordefinierten Gewindebohr-Gewindesteigung aufweist. Analog dazu sind auch im Reversier-Hub der Reversier-Vorschub und die damit synchronisierte Reversier-Drehzahl so aufeinander abgestimmt, dass sich eine Reversier-Gewindesteigung ergibt. Die Reversier-Gewindesteigung kann je nach Einstellung der vorgenannten Parameter identisch sein mit der Gewindebohr-Gewindesteigung oder gegebenenfalls auch davon unterschiedlich sein. Beispielhaft kann im Gewindebohr-Hub dem Innengewinde eine erste Steigung (das heißt Gewindebohr-Gewindesteigung) aufgeprägt werden, während im Reversier-Hub dem Innengewinde eine dazu unterschiedliche zweite Gewindesteigung (das heißt Reversier-Gewindesteigung) aufgeprägt wird. Die Reversier-Gewindesteigung und die Gewindehub-Gewindesteigung können so aufeinander abgestimmt werden, dass sich insgesamt ein belastungsoptimiertes Innengewinde-Profildesign ergibt.

Beispielhaft kann im Gewindebohr-Hub - mit Ausnahme der Späne zugewandten Gewindeflanken des Innengewindes -die Innengewinde-Geometrie (das heißt die späneabgewandten Gewindeflanken des Innengewindes, der radial innere Gewinde-Innenscheitel des Innengewindes sowie der radial äußere Gewindegrund des Innengewindes) bereits auf ein Fertigmaß hergestellt sein. Erst im Anschluss daran können im Reversier-Hub die spänezugewandten Gewindeflanken des Innengewindes auf das Fertigmaß hergestellt werden.

In einer bevorzugten Ausführungsform folgt nach dem Gewindebohr-Hub nicht unmittelbar der Reversier-Hub, sondern folgt vielmehr ein Nutformschritt, bei dem eine an das Innengewinde anschließende Umlaufnut ohne Gewindesteigung gebildet wird, in der das Gewindeprofil des Gewindebohr-Werkzeuges belastungsfrei drehen kann. Auf diese Weise kann die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt.

Das Gewindeprofil des Gewindebohr-Werkzeugs kann später beschriebene Gewindeprofilzähne und/oder zumindest einen Reversierzahn aufweisen. Sowohl die Gewindeprofilzähne als auch der Reversierzahn können jeweils als Formzahn (mit entsprechenden Formkanten) oder als Schneidzahn (mit entsprechenden spanabhebenden Schneidkanten) oder als eine Kombination daraus ausgebildet sein.

Wie oben erwähnt, kann das Gewindeprofil des Gewindebohr-Werkzeugs in der im Nutformschritt erzeugten Umlaufnut ohne Gewindesteigung belastungsfrei drehen. Durch die Bereitstellung der Umlaufnut wird es außerdem ermöglicht, dass das Gewindebohr-Werkzeug mit einer Schneidkante eine umlaufende Gewindesenkung in der Bohrungsöffnung der Bohrung erzeugt. Die umlaufende Gewindesenkung kann also während des obigen Nutformschrittes erzeugt werden.

In einer technischen Umsetzung kann der Gewindebohr-Hub in der Gewindebohr-Richtung unmittelbar mit einem Nutform-Hub verlängert werden. In diesem Fall wird das Gewindebohr-Werkzeug über die Soll-Gewindetiefe hinaus bis zum Erreichen einer Soll-Bohrungstiefe bewegt, und zwar mit einem Nutform-Vorschub sowie einer Nutform-Drehzahl, die zueinander nicht synchronisiert sind und/oder unterschiedlich zum Gewindebohr-Vorschub und zur Gewindebohr-Drehzahl sind.

Bevorzugt ist es, wenn am Ende des Nutformschrittes das Gewindeprofil, in der Axialrichtung betrachtet, vollständig in der Umlaufnut der Gewindebohrung belastungsfrei drehen kann. Die Umlaufnut wird während des Nutform-Hubes mit Hilfe der Hauptschneide sowie des Werkzeug-Gewindeprofils am Gewindebohr-Werkzeug erzeugt.

Bei Erreichen der Soll-Bohrungstiefe wird der Nutform-Vorschub auf 0 reduziert. Gleichzeitig wird auch die Nutform-Drehzahl auf 0 reduziert, um die für den Reversier-Hub erforderliche Drehrichtungsumkehr zu ermöglichen.

Beim Start des Reversier-Hubes wird das Gewindebohr-Werkzeug so angesteuert, dass das Werkzeug-Gewindeprofil nicht belastungsfrei, sondern unter spanabhebender Belastung in den Gewindegang-Auslauf eingefahren werden kann, der in die Umlaufnut einmündet. Anschließend wird das Gewindebohr-Werkzeug in einer zur Gewindebohr-Richtung gegenläufigen Reversier-Richtung aus der Gewindebohrung herausgeführt, und zwar mit einem Reversier-Vorschub sowie damit synchronisierter Reversier-Drehzahl, wodurch das Werkzeug-Gewindeprofil unter Materialabtrag (das heißt unter Fertigstellung der Späne zugewandten Gewindeflanken auf das Fertigmaß) aus der Gewindebohrung herausgedreht werden kann.

Während der Durchführung des Gewindebohr-Hubes, des Nutform-Hubes und des Reversier-Hubes bleiben bevorzugt die Kernbohrungs-Längsachse und die Rotationsachse des Gewindebohr-Werkzeuges durchgängig koaxial zueinander ausgerichtet.

Ein Gewindebohr-Werkzeug zur Durchführung eines solchen Verfahrens kann bevorzugt einen Spannschaft und einen daran anschließenden Gewindebohr-Körper aufweisen. Entlang dessen Längsachse kann zumindest eine Spannut bis zu einer stirnseitigen Hauptschneide an der Bohrerspitze erstrecken. An der stirnseitigen Hauptschneide laufen eine die Spannut begrenzende Spanfläche und eine stirnseitige Freifläche der Bohrerspitze zusammen. In der Werkzeug-Umfangrichtung betrachtet kann die Spannut durch zumindest einen Bohrersteg begrenzt sein. Die Spanfläche der Spannut kann unter Bildung einer Nebenschneide in eine außenumfangsseitige Rückenfläche des Bohrerstegs übergehen. An der außenumfangsseitigen Rückenfläche des Bohrersteges kann das Gewindeprofil mit zumindest einem Gewinde-Schneidzahn ausgebildet sein. Die Zahnhöhe des Schneidzahns ist in der Radialrichtung so bemessen, dass der Schneidzahn die Hauptschneide in der Radialrichtung nach außen um einen Radialversatz überragt. Gegebenenfalls kann der Schneidzahn in der Radialrichtung nach außen flächenbündig die Hauptschneide verlängern. Alternativ und/oder zusätzlich kann der Schneidzahn in der Axialrichtung betrachtet um einen Axialversatz hinter der Hauptschneide angeordnet sein.

In einer bevorzugten Ausführungsvariante kann das Gewindebohr-Werkzeug drei Bohrerstege aufweisen. Jeder dieser Bohrerstege ist zumindest mit einem Gewinde-Schneidzahn ausgebildet. Die Gewinde-Schneidzähne sind bevorzugt nicht mit gleicher Schneiden-Geometrie ausgebildet, sondern vielmehr unterschiedlich ausgeführt. Beispielhaft können in der Bohrer-Umfangsrichtung hintereinander ein Vorschneidzahn, ein Mittelschneidzahn und ein Fertigbearbeitungszahn unterschiedlicher Schneidengeometrie am Bohrer ausgebildet sein. Die Schneidzähne sind in der Axialrichtung zueinander versetzt am Gewindebohr-Werkzeug ausgebildet. Deren Versatzma-ße sind so mit der Gewindebohr-Drehzahl und mit dem Gewindebohr-Vorschub abgestimmt, dass ein einwandfreies Gewindeschneiden gewährleistet ist.

Damit im Reversier-Hub das Flanken-Aufmaß von der spänezugewandten Gewindeflanke betriebssicher (das heißt ohne vorzeitigem Werkzeugbruch) abgetragen wird, kann das Werkzeug-Gewindeprofil bevorzugt zumindest einen speziell dafür ausgebildeten Reversierzahn aufweisen. Dieser kann mit einer Gewindeflanken-Schneid-/Formkante ausgebildet sein. Im Reservier-Hub kann die Gewindeflanken-Schneid-/Formkante das im Gewindebohr-Hub vorgehaltene Flanken-Aufmaß von den spänezugewandten Gewindeflanken bis auf das Fertigmaß abtragen.

Der Reversierzahn ist, wie auch der Gewindeprofilzahn, auf der Bohrersteg-Rückenfläche ausgebildet. In einer technischen Werkzeug-Realisierung kann der Reversierzahn die Haupt-Schneidenecke um eine Reversier-Zahnhöhe radial nach außen überragen. Die Gewindeflanken-Schneidkante des Reversierzahns kann an einer radial inneren Schneiden-Innenecke in eine Reversier-Schneide übergehen. In diesem Fall kann das Gewindebohr-Werkzeug nicht nur die spänezugewandte Gewindeflanke des Bohrloch-Innengewindes bearbeiten, sondern gleichzeitig auch dessen Gewinde-Innenscheitel entgraten. Bevorzugt können der Reversierzahn und/oder die Reversier-Schneide konstruktiv so ausgelegt sein, dass diese nur im Reversier-Hub aktiv sind und im Gewindebohr-Hub weitgehend funktionslos sind.

Die oben erwähnte Reversier-Schneide kann entlang der Bohrer-Längsrichtung verlaufen. In diesem Fall können an der Reversier-Schneide die außenumfangsseitige Bohrersteg-Rückenfläche und die Spanfläche der Spannut zusammenlaufen. Von daher sind die Reversier-Schneide und die Nebenschneide an, in der Bohrer-Umfangsrichtung gegenüberliegenden Bohrersteg-Längskanten ausgebildet.

Um ein stabiles Gewindeprofil am Gewindebohrer-Werkzeug auszubilden, ist es bevorzugt, wenn sich in Bohrer-Umfangsrichtung ein auf der Bohrersteg-Rückenfläche ausgebildeter Zahnsteg an den zumindest einen Gewindeprofilzahn und/oder an den Reversierzahn anschließt. Auf diese Weise sind der Gewindeprofilzahn und/oder der Reversierzahn im Gewindebohr-Hub und/oder im Reversier-Hub vor einem frühzeitigen Werkzeugbruch geschützt. Bevorzugt können der Gewindeprofilzahn und der Reversierzahn über einen, auf der Bohrersteg-Rückenfläche ausgebildeten Zahnsteg miteinander verbunden sein. Der Zahnsteg kann in der Bohrer-Umfangsrichtung voneinander abgewandte Stirnseiten aufweisen, die jeweils den Gewindeprofilzahn und den Reversierzahn bilden.

Der Zahnsteg kann eine radial äußere Steg-Scheitelfläche sowie eine der Bohrerspitze zugewandte Steg-Flankenfläche und eine der Bohrerspitze abgewandte Steg-Flankenfläche aufweisen. Um die Werkzeug-Belastung während des Gewindebohr-Hubs und/oder während des Reversier-Hubs zu reduzieren, können die oben erwähnten Stegflächen zumindest teilweise als Freiflächen ausgebildet sein, die im Gewindebohr-Hub und/oder im Reversier-Hub im Wesentlichen funktionslos sind.

Die Steg-Scheitelfläche des obigen Zahnstegs kann an einer ersten Umfangs-Stegkante in die, der Bohrerspitze zugewandte Steg-Flankenfläche übergehen. Zudem kann die Steg-Scheitelfläche an einer zweiten Umfangs-Stegkante in die, der Bohrerspitze abgewandte Steg-Flankenfläche übergehen.

Im Hinblick auf eine reduzierte Werkzeug-Belastung während des Nutform-Hubs ist es bevorzugt, wenn das Gewindebohr-Werkzeug eine spezielle Umlaufnut-Schneide aufweist, um im Nutform-Hub die Umlaufnut herzustellen. In einer bevorzugten Ausführungsvariante kann zumindest eine der beiden oben erwähnten Umfangs-Stegkanten als eine solche Umlaufnut-Schneide ausgebildet sein, mittels der im Nutform-Hub die an das Bohrloch-Innengewinde anschließende Umlaufnut gebildet wird. Im Gewindebohr-Hub und im Reversier-Hub kann dagegen die Umlauf-Schneide im Wesentlichen funktionslos sein.

Wie aus der obigen Beschreibung hervorgeht, kann sich an das Innengewinde der Gewindebohrung die Umlaufnut anschließen. Diese erfüllt die folgende Doppelfunktion: Erstens kann während der Gewindeherstellung das Gewindeprofil des Gewindebohr-Werkzeugs belastungsfrei in der Umlaufnut drehen. Zweitens bildet die Umlaufnut beim Verschrauben einer Befestigungsschraube einen Ausgleichsraum, der Schraubenlängen-Toleranzen der Befestigungsschraube kompensiert. Die Schraubenlänge einer solchen Befestigungsschraube ist herstellungsbedingt stark toleranzbehaftet. Mit Hilfe der Umlaufnut kann die toleranzbehaftete Befestigungsschraube prozesssieher verschraubt werden, ohne dass die Gewindetiefe der Gewindebohrung erhöht werden muss, wie es im Stand der Technik erforderlich wäre.

Die Erfindung und ihre vorteilhaften Aus- und Weiterbildungen sowie deren Vorteile werden nachfolgend anhand von Zeichnungen näher erläutert.

Es zeigen:
- Figur 1: in einer Seitenschnittdarstellung ein in einem Werkstück ausgebildetes Gewindesackloch;
- Figur 2: in einer Ansicht von vorne ein Gewindebohr-Werkzeug;
- Figuren 3 und 4: jeweils unterschiedliche Seitenansichten des Gewindebohr-Werkzeugs;
- Figuren 5 bis 8: jeweils Ansichten, die Verfahrensschritte zur Erzeugung des in der Figur 1 gezeigten Gewindesackloches veranschaulichen;
- Figur 9: eine vergrößerte Teilansicht, in der eine Spanabfuhr während des Gewindebohr-Hubes veranschaulicht ist;
- Figur 10: eine vergrößerte Teilansicht, in der ein Materialabtrag während des Reversier-Hubes veranschaulicht ist;
- Figuren 11 bis 14: unterschiedliche Ansichten eines Gewindebohr-Werkzeugs gemäß einem weiteren Ausführungsbeispiel; und
- Figur 15: eine Ansicht entsprechend der Figur 10.

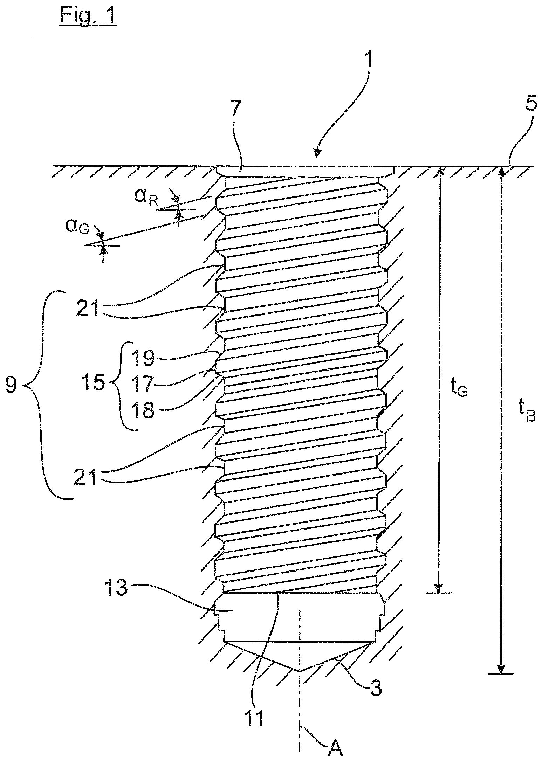

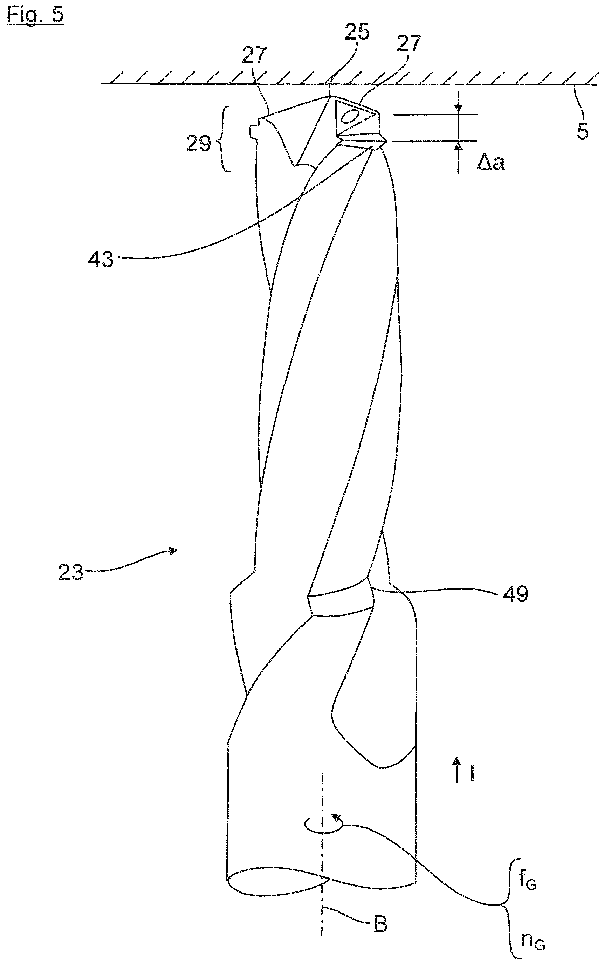

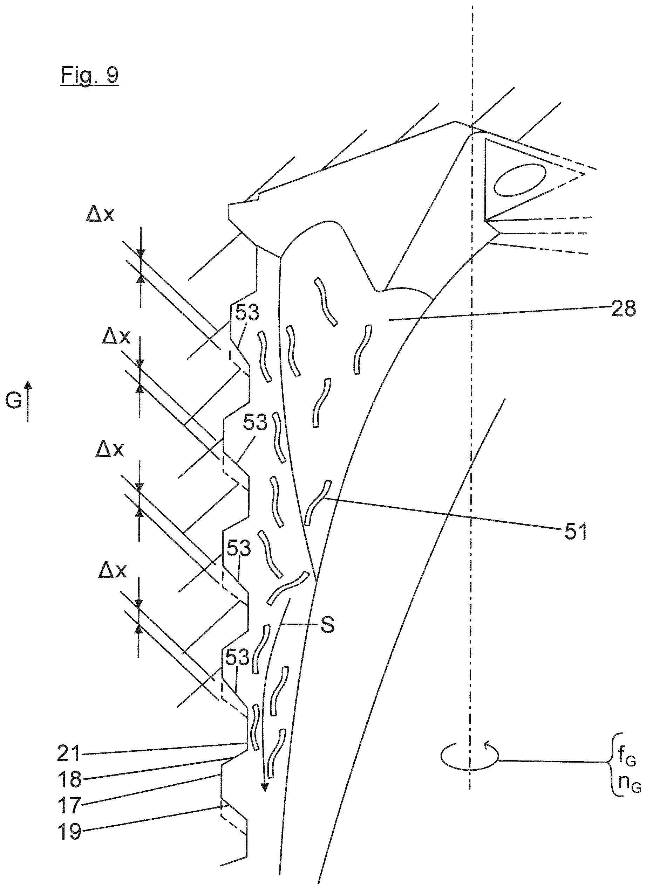

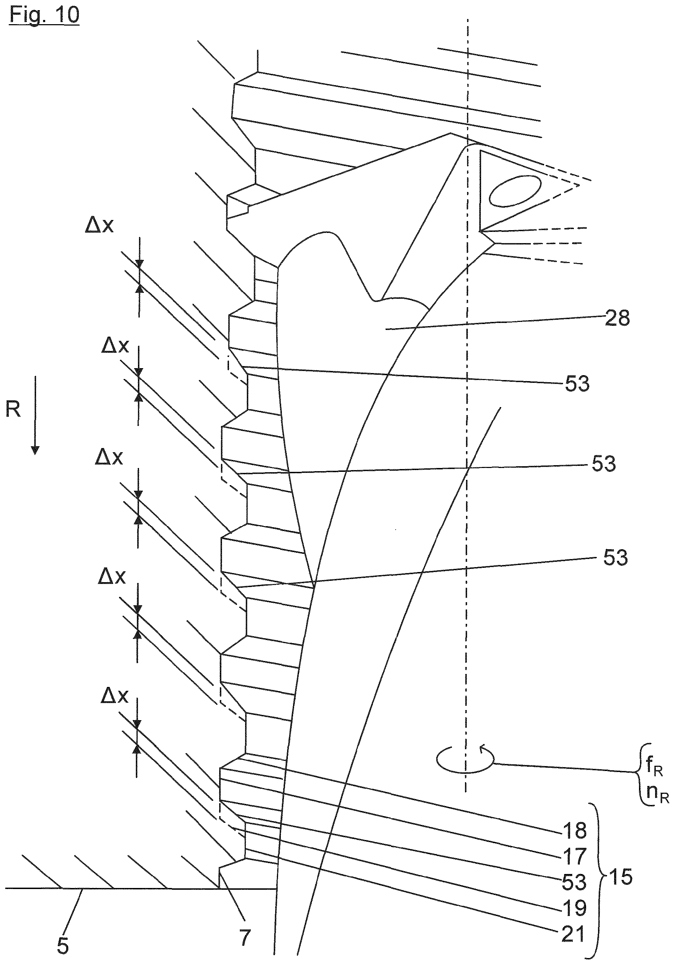

In der Figur 1 ist eine fertiggestellte Gewindesackloch-Bohrung 1 gezeigt. Die Bohrung 1 ist mit ihrem Bohrungsgrund 3 bis zu einer Soll-Bohrtiefe t_{B} in ein Werkstück 5 mittels einer sogenannten Einschuss-Bohrbearbeitung eingearbeitet, die später anhand der Figuren 5 bis 8 erläutert wird. Die Bohrung 1 weist an ihrer Bohrungsöffnung eine umlaufende Gewindesenkung 7 auf, die im weiteren Verlauf nach unten in ein Innengewinde 9 übergeht. Das Innengewinde 9 erstreckt sich entlang der Bohrungsachse A bis zu einer nutzbaren Soll-Gewindetiefe t_{G}. Wie aus der Figur 1 weiter hervorgeht, mündet ein Gewindegang 15 des Innengewindes 9 mit einem Gewindeauslauf 11 in einer Umlaufnut 13. Diese weist keine Gewindesteigung auf und ist, in der Axialrichtung betrachtet, zwischen dem Innengewinde 9 und dem Bohrungsgrund 3 ausgebildet. Der Gewindegang 15 weist einen radial äußeren Gewindegrund 17 sowie seitliche obere und untere Gewindeflanken 18, 19 auf, die radial innen in einen Gewinde-Innenscheitel 21 übergehen. Die in der Figur 1 oberen Gewindeflanken 19 sind die später anhand der Figuren 9 und 10 beschriebenen spänezugewandten Gewindeflanken, während die in der Figur 1 unteren Gewindeflanken 18 die späneabgewandten Gewindeflanken sind.

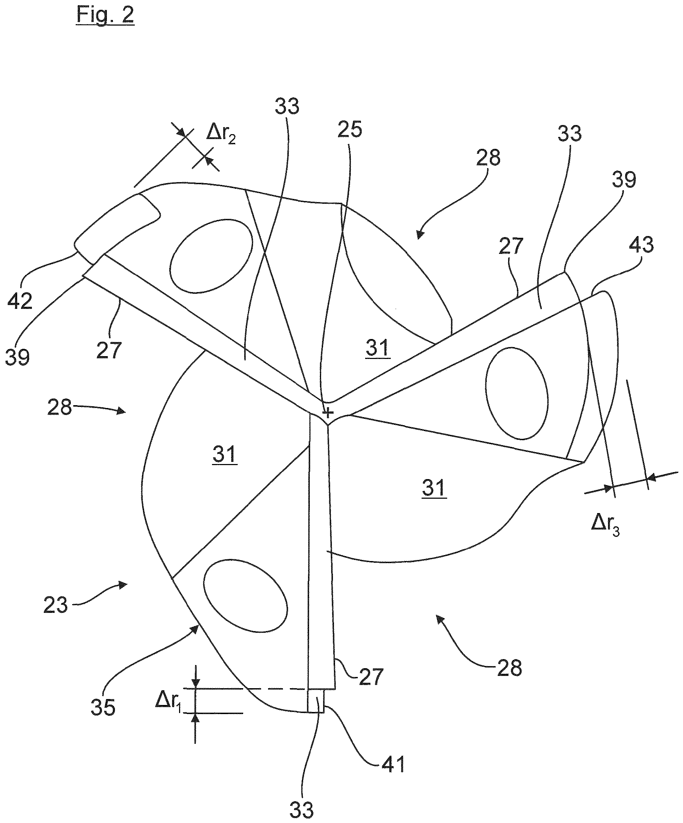

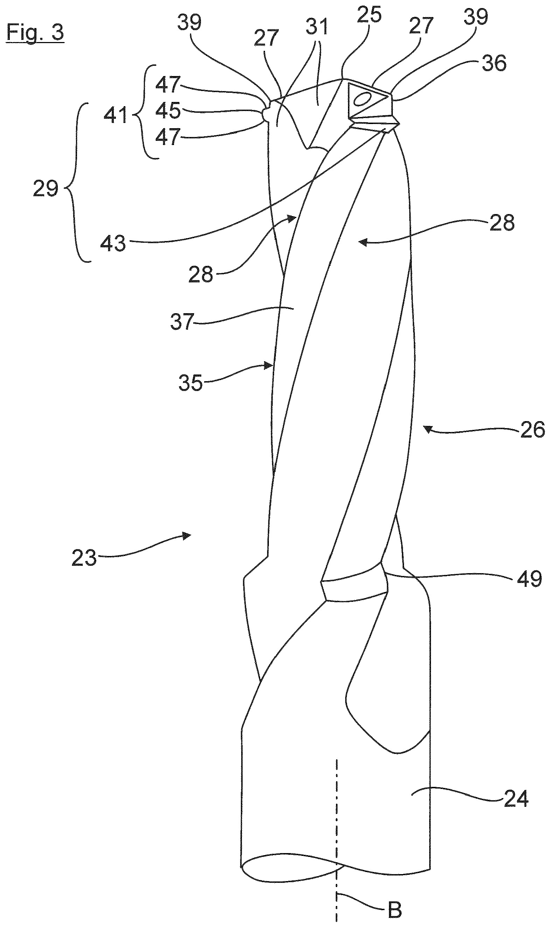

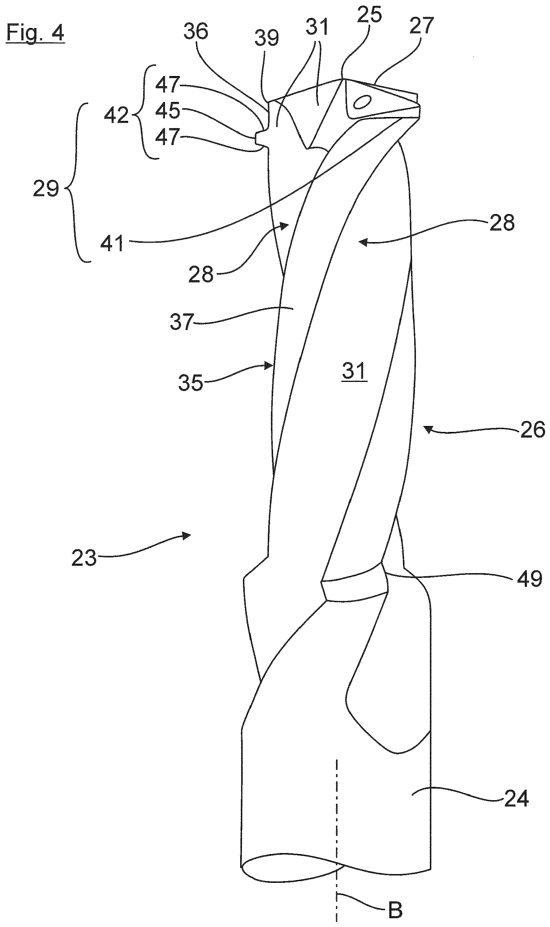

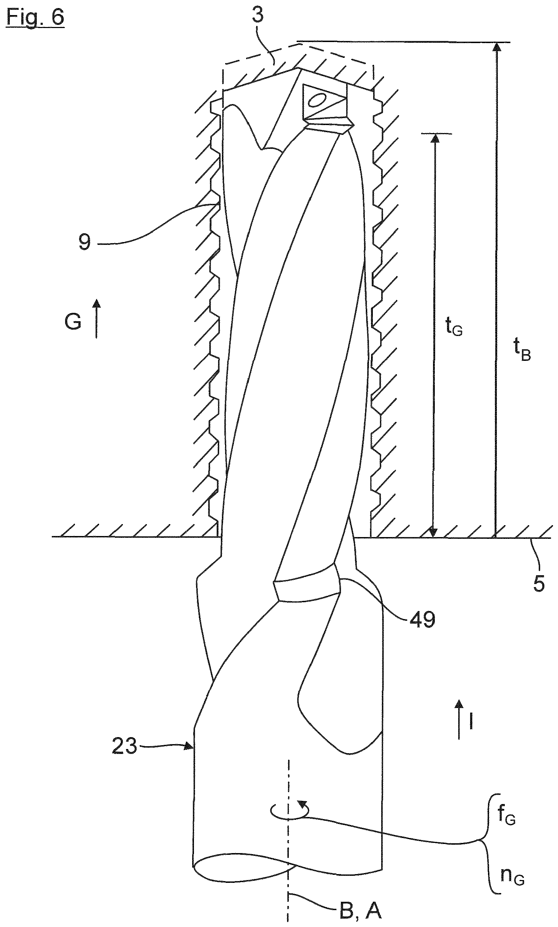

Die in der Figur 1 gezeigte Gewindesackloch-Bohrung 1 wird mit Hilfe eines nachfolgend anhand der Figuren 2 bis 4 beschriebenen Gewindebohr-Werkzeugs 23 durchgeführt. Demzufolge weist das Werkzeug 23 in der Figur 2 an seiner Bohrerspitze 25 drei gleichmäßig umfangsverteilte, stirnseitige Hauptschneiden 27 sowie ein in der Gewindebohr-Richtung I (Figur 5 oder 6) nacheilendes Gewindeprofil 29 auf.

Das Werkzeug 23 ist mit einem Spannschaft 24 sowie einem daran anschließenden Gewindebohr-Körper 26 aufgebaut, entlang dessen Bohrungsachse A sich insgesamt drei umfangsseitig verteilte Spannuten 28 bis zu der jeweiligen stirnseitigen Hauptschneide 27 an der Bohrerspitze 25 erstrecken.

An jeder Hauptschneide 27 läuft eine die Spannut 28 begrenzende Spanfläche 31 und eine stirnseitige Freifläche 33 der Bohrerspitze 25 zusammen. In der Werkzeug-Umfangsrichtung ist die jeweilige Spannut 28 durch einen Bohrersteg 35 begrenzt. Insgesamt weist das in den Figuren gezeigte Gewindebohr-Werkzeug 23 drei Bohrerstege 35 auf. Die Spanfläche 31 der Spannut 28 geht dabei unter Bildung einer Nebenschneide 36 in eine außenumfangsseitige Rückenfläche 37 des jeweiligen Bohrerstegs 35 über. Die Nebenschneide 36 und die stirnseitige Hauptschneide 27 laufen an einer radial äußeren Haupt-Schneidenecke 39 zusammen.

An den außenumfangsseitigen Rückenflächen 37 der drei Bohrerstege 35 weist das Gewindeprofil 29 jeweils einen Vorschneidzahn 41, einen Mittelschneidzahn 42 und einen Fertigschneidzahn 43 auf. Jeder der Schneidzähne 41, 42, 43 ist mit einer radial äußeren Gewindegrund-Schneidkante 45 sowie Gewindeflanken-Schneidkanten 47 ausgebildet, um den in der Figur 1 gezeigten Gewindegang 15 zu schneiden/zu formen. Die Schneidzähne 41 bis 43 sind dabei in unterschiedlichen Geometrien ausgeführt sowie mit unterschiedlichen Axialabständen Δa (nur in der Figur 5 angedeutet) von der Bohrerspitze 25 beabstandet, um den in der Figur 1 gezeigten Gewindegang 15 des Innengewindes 9 zu schneiden. Zudem können die Vor-, Mittel- und Fertigschneidzähne 41, 42, 43 in der Radialrichtung unterschiedliche Zahnhöhen Δr₁, Δr₂, Δr₃ (Fig. 2) aufweisen. Exemplarisch können die Vor-, Mittel-und Fertigschneidzähne 41, 42, 43 in der Umfangsrichtung axial größer werden. Der Fertigschneidzahn 43 schneidet dann die gesamte Innengewinde-Kontur. Alternativ dazu kann der Fertigschneidzahn 43 auch als ein Formzahn ausgeführt sein, um die Gewindefestigkeit zu steigern.

Das Gewindebohr-Werkzeug 23 weist zudem am Übergang zwischen dem Gewindebohr-Körper 26 und dem Spannschaft 24 eine Schneidkante 49 zur Bildung der in der Figur 1 gezeigten Gewindesenkung 7 auf.

Nachfolgend wird anhand der Figuren 5 bis 8 das Verfahren zur Erzeugung der in der Figur 1 gezeigten Gewindesackloch-Bohrung 1 beschrieben: Demzufolge wird in der Figur 5 das Gewindebohr-Werkzeug 23 in einer Gewindebohr-Richtung I auf das noch nicht vorgebohrte Werkzeug 5 geführt und eine Einschuss-Bohrung durchgeführt. In einem Gewindebohr-Hub G erzeugen die Hauptschneiden 27 eine Kernlochbohrung und gleichzeitig das nacheilende Gewindeprofil 29 das Innengewinde 9 an der Innenwandung der Kernlochbohrung. Der Gewindebohr-Hub G erfolgt bei einem Gewindebohr-Vorschub f_{G} und bei damit synchronisierter Gewindebohr-Drehzahl n_{G} in einer Gewindebohr-Drehrichtung, und zwar bis die Soll-Gewindetiefe t_{G} erreicht ist (Figur 6).

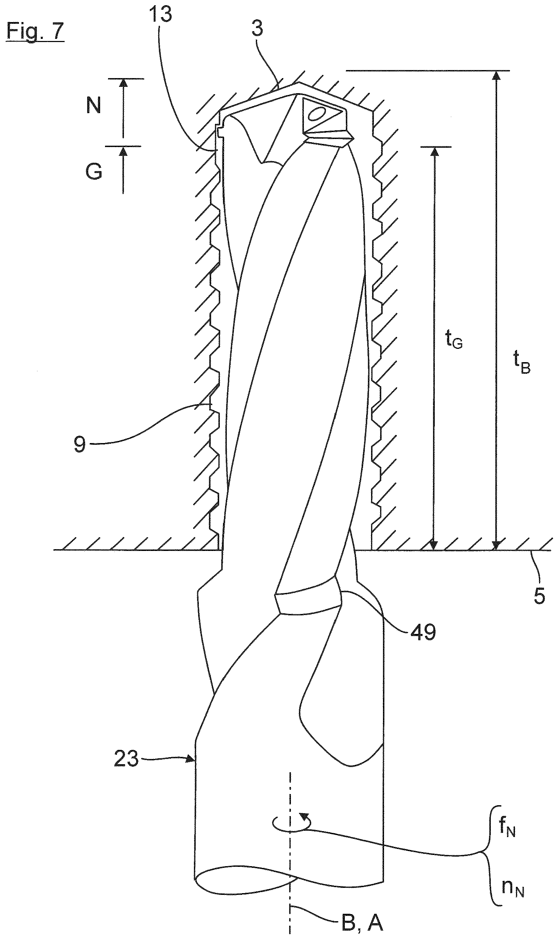

Unmittelbar anschließend wird ein Nutformschritt (Figur 7) durchgeführt, bei dem der Gewindebohr-Hub G in der Gewindebohr-Richtung I um einen Nutform-Hub N verlängert wird. Im Unterschied zum Gewindeform-Hub G sind im Nutform-Hub H der Nutform-Vorschub f_{N} und die Nutform-Drehzahl n_{N} des Gewindebohr-Werkzeugs 23 nicht zueinander synchronisiert sowie unterschiedlich zum vorangegangenen Gewindebohr-Vorschub f_{G} und zur Gewindebohr-Drehzahl n_{G}.

Auf diese Weise erzeugt das Gewindeprofil 29 mit seinen Vor-, Mittel- und Fertigschneidzähnen 41, 42, 43 die in der Figur 7 gezeigte Umlaufnut 13, in der das Gewindeprofil 29 belastungsfrei drehen kann. Der Nutform-Vorschub f_{N} sowie die Nutform-Drehzahl n_{N} sind so ausgelegt, dass eine übermäßig große Schneidenbelastung der Schneidzähne 41 bis 43 verhindert ist.

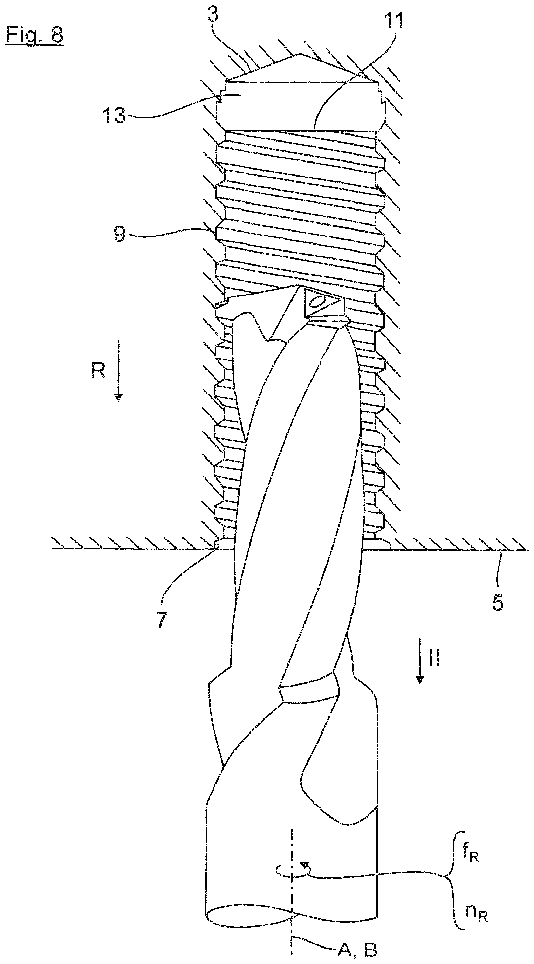

Bei Erreichen der Soll-Bohrungstiefe t_{B} wird sowohl der Nutform-Vorschub f_{N} als auch die Nutform-Drehzahl n_{N} auf 0 reduziert. Anschließend erfolgt zur Vorbereitung eines Reversier-Hubes R (Figur 8) eine Drehrichtungsumkehr. Im Reversier-Hub R (Figur 8) wird das Gewindebohr-Werkzeug 23 in einer Reversier-Richtung II (Figur 8) aus der Gewindebohrung 1 herausgeführt, und zwar mit einem entgegengesetzten Reversier-Vorschub f_{R} sowie damit synchronisierter Reversier-Drehzahl n_{R}. Diese Parameter sind so bemessen, dass das Gewindeprofil 29 des Gewindebohr-Werkzeugs 23 nicht belastungsfrei, sondern unter spanabhebender Belastung im Gewindegang 15 des Innengewindes 9 aus der Gewindebohrung 1 geführt wird. Auf diese Weise wird, wie später noch beschrieben, eine Kollisionskontur 53 (Figur 9 oder 10), die noch an den Gewindeflanken 19 des Innengewindes 9 ausgebildet ist, abgetragen.

Beim Start des Reversier-Hubes R wird das Gewindebohr-Werkzeug 23 von der Fertigungsanlage so angesteuert, dass die Schneidzähne 41, 42, 43 jeweils unter spanabhebender Belastung in den Gewindegang-Auslauf 11, der in die Umlaufnut 13 mündet, eingefahren werden. Im weiteren Verlauf des Reversier-Hubes R wird das Gewindeprofil 29 des Gewindebohr-Werkzeugs 23 dann unter spanabhebender Belastung (das heißt die Kollisionskontur 53 wird abgetragen) durch den Gewindegang 15 des Innengewindes 9 nach außen gedreht.

In der Figur 9 ist der in der Figur 6 veranschaulichte Gewindebohr-Hub G detailliert dargestellt. Demzufolge wird das Gewindebohr-Werkzeug 23 mit dem vordefinierten Gewindebohr-Vorschub f_{G} sowie mit der damit synchronisierten Gewindebohr-Drehzahl n_{G} in der Gewindebohr-Richtung I in das Werkstück 5 eingetrieben. Dabei werden Späne 51 erzeugt, die in einer zur Gewindebohr-Richtung I gegenläufigen Spanabfuhrrichtung S aus der Gewindebohrung 1 gedrückt werden. Die in der Spanabfuhrrichtung S aus der Gewindebohrung 1 geförderten Späne 51 kollidieren dabei mit den spänezugewandten Gewindeflanken 19 des Innengewindes 5.

Erfindungsgemäß wird im Gewindebohr-Hub I - mit Ausnahme der spänezugewandten Gewindeflanken 19 des Innengewindes 9 - die komplette Innengewinde-Geometrie bereits auf Fertigmaß hergestellt, und zwar im Einzelnen die späneabgewandten Gewindeflanken 18, der radial innere Gewinde-Innenscheitel 21 sowie der radial äußere Gewindegrund 17. Im Unterschied dazu sind die spänezugewandten Gewindeflanken 19 des Innengewindes 9 nach dem Gewindebohr-Hub I noch nicht auf ein Fertigmaß hergestellt, sondern vielmehr mit einem zusätzlichen Flanken-Aufmaß Δx (Figur 9) hergestellt. Auf diese Weise ist an den spänezugewandten Gewindeflanken 19 eine Kollisionskontur 53 bereitgestellt, mit der die abzuführenden Späne 51 kollidieren.

Die obige Kollisionskontur 53 an den spänezugewandten Gewindeflanken 19 wird im anschließenden Reversier-Hub R bis auf das Fertigmaß abgetragen. Hierzu wird das Gewindebohr-Werkzeug im Nutformschritt derart in Axialrichtung positioniert, dass beim Start des Reversier-Hubes R das Gewindebohr-Werkzeug 23 so angesteuert wird, dass das Gewindeprofil 29 unter spanabhebender Belastung, das heißt unter Materialabtrag, in den Gewindegang-Auslauf 11 (Figur 1), der in die Umlaufnut mündet, eingefahren wird.

Durch entsprechende Einstellung des Reversier-Vorschubes f_{R} und der damit synchronisierten Reversier-Drehzahl r_{R} ergibt sich im Reversier-Hub R eine Reversier-Gewindesteigung α_{R} für die spänezugewandten Gewindeflanken 19 im Innengewinde 9. Die Reversier-Gewindesteigung α_{R} der spänezugewandten Gewindeflanke 19 kann identisch zu der Gewindebohr-Gewindesteigung α_{G} sein oder davon unterschiedlich, um gegebenenfalls ein belastungsoptimiertes Innengewinde-Design zu erzielen.

Auf diese Weise können unterschiedliche Flankendurchmesser bei unterschiedlichen Legierungen des Werkstückes 5 eingestellt werden, wobei der jeweilige Flankendurchmesser jeweils speziell an die eingesetzte Werkstück-Legierung angepasst ist. Darüber hinaus ist es auch möglich, die Gewindezähne des Gewindeprofils im Rahmen einer Werkzeug-Nachbearbeitung nachzuschleifen. In diesem Fall würde sich der Axialversatz vergrößern, um den das Werkzeug im Nutformschritt zu Beginn des Reversier-Hubes R in Axialrichtung zu verstellen ist, um einen entsprechenden Materialeingriff in die spänezugewandten Gewindeflanken 19 zu erzielen.

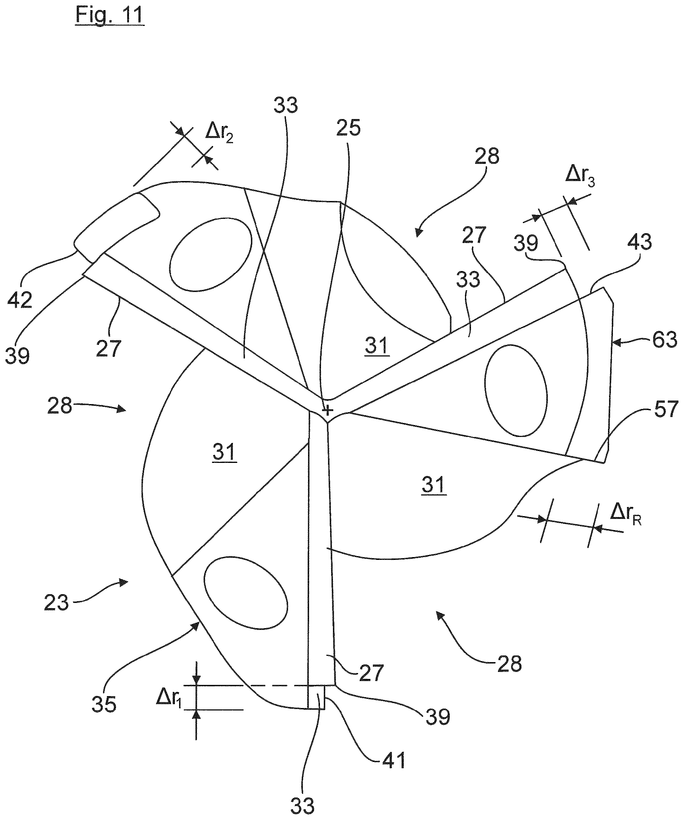

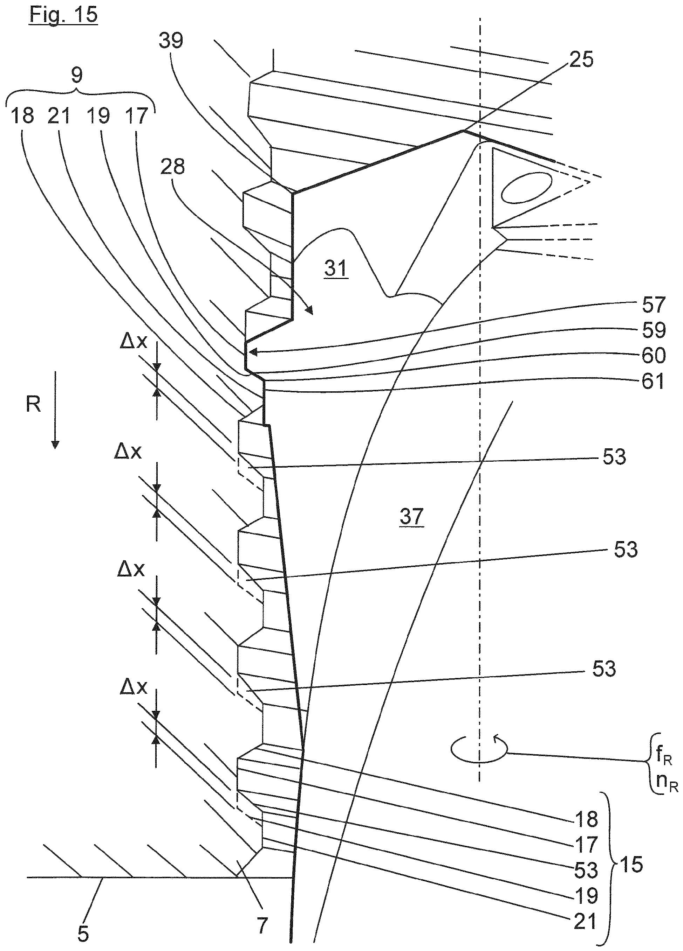

Nachfolgend werden anhand der Figuren 11 bis 15 der Aufbau und die Wirkungsweise eines Gewindebohr-Werkzeugs gemäß einem weiteren Ausführungsbeispiel beschrieben. Das in der Figur 11 gezeigte Gewindebohr-Werkzeug entspricht grundsätzlich dem der vorangegangenen Figuren. Von daher wird auf die Vorbeschreibung verwiesen. Das in der Figur 11 gezeigte Gewindebohr-Werkzeug weist zusätzlich einen Reversierzahn 57 auf, mit dem im später anhand der Figur 15 beschriebenen Reversier-Hub R das Flanken-Aufmaß Δx von der spänezugewandten Gewindeflanke 19 betriebssicher abgetragen wird.

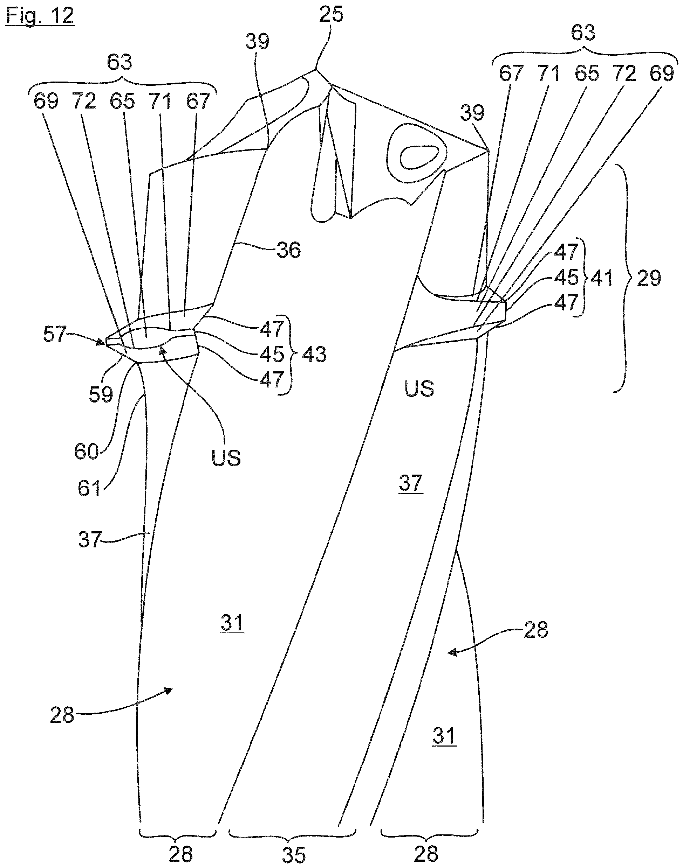

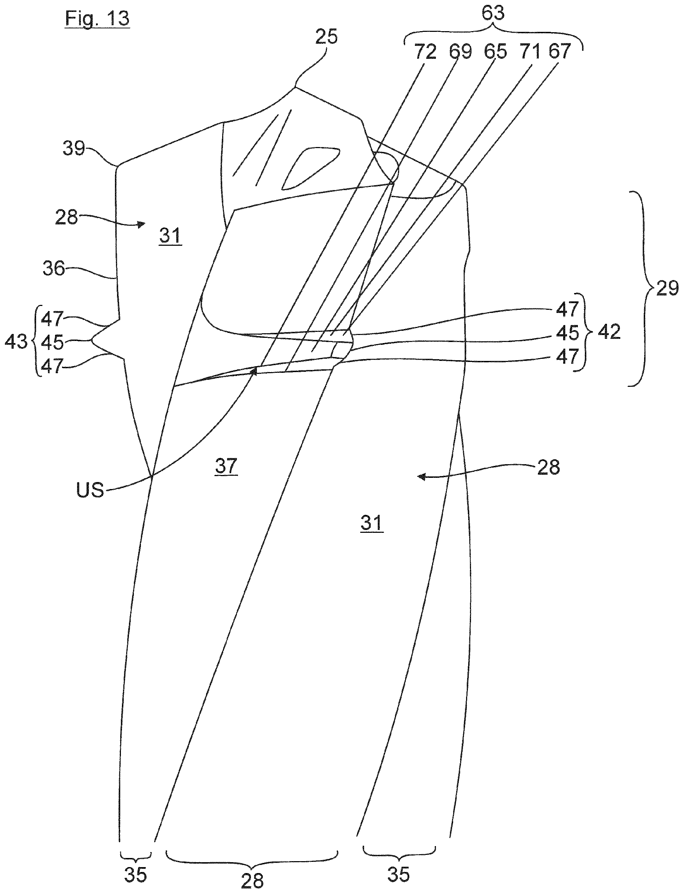

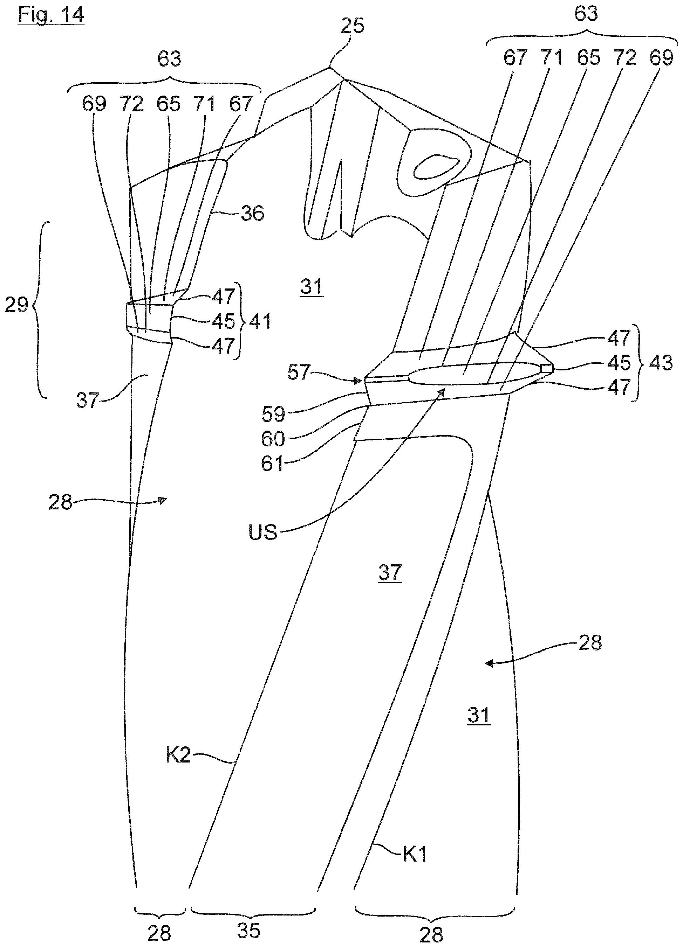

Die Figuren 12 bis 14 betreffen unterschiedliche Seitenansichten des Gewindebohr-Werkzeugs. In der Figur 12 ist der Vorbearbeitungszahn 41, der Endbearbeitungszahn 43 sowie der Reversierzahn 57 gezeigt. In der Figur 13 ist der Mittelzahn 42 sowie der Endbearbeitungszahn 43 gezeigt, während in der Figur 14 der Endbearbeitungszahn 43, der Reversierzahn 57 und der Vorbearbeitungszahn 41 gezeigt ist.

Der Reversierzahn 57 ist in den Figuren 12, 14, 15 mit einer Gewindeflanken-Schneid-/Formkante 59 ausgebildet. Im Reservier-Hub R wird das Gewindebohr-Werkzeug so angesteuert, dass deren Gewindeflanken-Schneid-/Formkante 59 das Flanken-Aufmaß Δx von den spänezugewandten Gewindeflanken 19 bis auf das Fertigmaß abträgt.

Der Reversierzahn 57 ist, wie auch die Gewindeprofilzähne 41, 42, 43, auf der Bohrersteg-Rückenfläche 37 ausgebildet. Der Reversierzahn 57 überragt dabei die Haupt-Schneidenecke 39 um eine Reversier-Zahnhöhe Δr_{R} (Figur 11) radial nach außen. Die Gewindeflanken-Schneidkante 59 des Reversierzahns 57 geht in der Figur 14 oder 15 an einer radial inneren Schneiden-Innenecke 60 in eine Reversier-Schneide 61 über, die ebenfalls im Reversier-Hub H aktiv ist. Von daher erfolgt im Reversier-Hub R nicht nur eine Bearbeitung (zum Beispiel Spanbearbeitung) der spänezugewandten Gewindeflanken 19 des Bohrloch-Innengewindes 9, sondern gleichzeitig auch eine Entgratung der Gewinde-Innenscheitel 21 des Innengewindes 9, wie es in der Figur 15 angedeutet ist. Bei dieser Entgratung wird eine Grat-Bildung am Gewinde-Innenscheitel 21 vermieden, die ansonsten während der Bearbeitung der spänezugewandten Gewindeflanken 19 sich ergeben würde.

Wie aus den Figuren 12 bis 15 weiter hervorgeht, laufen an der Reversier-Schneide 61 die außenumfangsseitige Bohrersteg-Rückenfläche 37 und die Spanfläche 31 der Spannut 28 zusammen. Die Reversier-Schneide 61 und die Nebenschneide 36 verlaufen daher beide entlang der Bohrer-Längsrichtung und sind an, in der Bohrer-Umfangsrichtung gegenüberliegenden Bohrersteg-Längskanten K1, K2 (Figur 14) ausgebildet.

Um ein stabiles Gewindeprofil 29 am Gewindebohr-Werkzeug auszubilden, schließt sich an jedem Gewindeprofilzahn 41, 42, 43 und am Reversierzahn 57 jeweils ein Zahnsteg 63 an. Dieser ist jeweils auf der Bohrersteg-Rückenfläche 37 ausgebildet. Dadurch ist der jeweilige Gewindeprofilzahn 41, 42, 43 und der Reversierzahn 57 im Gewindebohr-Hub G und/oder im Reversier-Hub R vor einem frühzeitigen Werkzeugbruch geschützt. Wie aus der Figur 14 hervorgeht, ist der Gewindeprofilzahn 43 und der Reversierzahn 57 über einen, auf der Bohrersteg-Rückenfläche 37 ausgebildeten Zahnsteg 63 miteinander verbunden. Der Zahnsteg 63 weist eine radial äußere Steg-Scheitelfläche 65 sowie eine der Bohrerspitze 25 zugewandte Steg-Flankenfläche 67 und eine der Bohrerspitze 25 abgewandte Steg-Flankenfläche 69 auf. Um die Werkzeug-Belastung während des Gewindebohr-Hubs G und/oder während des Reversier-Hubs R zu reduzieren, können die oben erwähnten Stegflächen 65, 67, 69 zumindest teilweise als Freiflächen ausgebildet sein, die im Gewindebohr-Hub G und/oder im Reversier-Hub R im Wesentlichen funktionslos sind.

Gemäß den Figuren 12 bis 14 geht die Steg-Scheitelfläche 65 des Zahnstegs 63 an einer ersten Umfangs-Stegkante 71 in die, der Bohrerspitze 25 zugewandte Steg-Flankenfläche 67 über. Zudem geht die Steg-Scheitelfläche 65 in einer zweiten Umfangs-Stegkante 72 in die, der Bohrerspitze 25 abgewandte Steg-Flankenfläche 69 über. Im Hinblick auf eine reduzierte Werkzeug-Belastung während des Nutform-Hubs N weist das Gewindebohr-Werkzeug eine Umlaufnut-Schneide US (Figur 12 bis 14) auf, um im Nutform-Hub N die Umlaufnut 13 herzustellen. In der dargestellten Ausführungsvariante ist die Umlaufnut-Schneide US speziell mittels zweiten Umfangs-Stegkante 72 realisiert.

## Patentansprüche

1. Verfahren zum Erzeugen einer Gewindebohrung (1) in einem Werkstück (5) mit einem Gewindebohr-Werkzeug (23), das an seiner Bohrerspitze (25) eine Hauptschneide (27) und ein in einer Gewindebohr-Richtung (I) nacheilendes Gewindeprofil (29) aufweist, wobei das Verfahren einen Gewindebohr-Hub (G) aufweist, in dem das Gewindebohr-Werkzeug (23) mit einem Gewindebohr-Vorschub (f_{G}) in der Gewindebohr-Richtung (I) und mit einer damit synchronisierten Gewindebohr-Drehzahl (n_{G}) in das Werkstück (5) eingetrieben wird und die Werkzeug-Hauptschneide (27) eine Kernlochbohrung erzeugt sowie das Werkzeug-Gewindeprofil (29) ein Innengewinde (9) an der Innenwandung der Kernlochbohrung bildet, und einen Reversier-Hub (R) aufweist, in dem das Gewindebohr-Werkzeug (23) in einer Reversier-Richtung (II) aus der Gewindebohrung (1) herausgeführt wird mit entgegengesetztem Reversier-Vorschub (f_{R}) sowie damit synchronisierter Reversier-Drehzahl (n_{R}), so dass das Werkzeug-Gewindeprofil (29) im Gewindegang (15) des Innengewindes (9) aus der Gewindebohrung (1) geführt wird, wobei im Gewindebohr-Hub (G) Späne (51) erzeugt werden, die in einer zur Gewindebohr-Richtung (I) gegenläufigen Spanabfuhrrichtung (S) aus der Gewindebohrung (1) gefördert werden und dabei mit, den abzuführenden Spänen (51) zugewandten Gewindeflanken (19) des Innengewindes (9) kollidieren, **dadurch gekennzeichnet, dass** im Gewindebohr-Hub (G) die spänezugewandten Gewindeflanken (19) des Innengewindes (9) noch nicht auf ein Fertigmaß hergestellt werden, sondern mit einem Flanken-Aufmaß (Δx) hergestellt werden, und zwar unter Bildung einer Kollisionskontur (53), mit der die abzuführenden Späne (51) kollidieren.

2. Verfahren nach Anspruch 1, **dadurch gekennzeichnet, dass** im Gewindebohr-Hub (G) die Innengewinde-Geometrie, mit Ausnahme der spänezugewandten Gewindeflanken (19) des Innengewindes (9), auf Fertigmaß hergestellt wird.

3. Verfahren nach Anspruch 1 oder 2, **dadurch gekennzeichnet, dass** im Reversier-Hub (R) ein Materialabtrag erfolgt, bei dem das in Reversier-richtung (II) aus der Gewindebohrung (1) geführte Werkzeug-Gewindeprofil (29) das Flanken-Aufmaß (Δx) von den spänezugewandten Gewindeflanken (19) bis auf das Fertigmaß abträgt und/oder formt.

4. Verfahren nach einem der Ansprüche 1, 2 oder 3, **dadurch gekennzeichnet, dass** im Gewindebohr-Hub (G) der Gewindebohr-Vorschub (f_{G}) und die damit synchronisierte Gewindebohr-Drehzahl (n_{G}) eine Gewindebohr-Gewindesteigung (α_{G}) im Gewindegang (15) des Innengewindes (9) ergeben, und dass im Reversier-Hub (R) der Reversier-Vorschub (f_{R}) und die damit synchronisierte Reversier-Drehzahl (n_{R}) eine Reversier-Gewindesteigung (α_{R}) ergeben, und dass insbesondere der Reversier-Vorschub (f_{R}) und/oder die Reversier-Drehzahl (n_{R}) so eingestellt ist, dass sich eine im Vergleich zur Gewindebohr-Gewindesteigung (α_{G}) identische oder davon unterschiedliche Reversier-Gewindesteigung (α_{R}) ergibt.

5. Verfahren nach einem der vorhergehenden Ansprüche, **dadurch gekennzeichnet, dass** zwischen dem Gewindebohr-Hub (G) und dem Reversier-Hub (R) ein Nutformschritt erfolgt, bei dem der Gewindebohr-Hub (G) in der Gewindebohr-Richtung (I) um einen Nutform-Hub (N) verlängert wird, und zwar zur Bildung einer an das Innengewinde (9) anschließenden Umlaufnut (13) ohne Gewindesteigung, in der das Gewindeprofil (29) belastungsfrei drehen kann, und/oder dass durch die Bereitstellung der Umlaufnut (13) es außerdem ermöglicht ist, dass das Gewindebohr-Werkzeug (23) mit einer Schneidkante (49) eine umlaufende Gewindesenkung (7) in der Bohrungsöffnung der Bohrung (1) erzeugt, wobei die umlaufende Gewindesenkung (7) während des obigen Nutformschrittes erzeugt wird.

6. Verfahren nach Anspruch 5, **dadurch gekennzeichnet, dass** in dem Nutformschritt das Gewindebohr-Werkzeug (23) über die Soll-Gewindetiefe (t_{G}) hinaus bis zum Erreichen einer Soll-Bohrungstiefe (t_{B}) in der Gewindebohr-Richtung (I) bewegt wird, und zwar mit einem Nutform-Vorschub (f_{N}) und einer Nutform-Drehzahl (n_{N}), die zueinander nicht synchronisiert sein müssen und/oder unterschiedlich zum Gewindebohr-Vorschub (f_{G}) und zur Gewindebohr-Drehzahl (n_{G}) sind.

7. Verfahren nach Anspruch 5 oder 6, **dadurch gekennzeichnet, dass** im Nutformschritt das Gewindeprofil (29) des Gewindebohr-Werkzeugs (23), in der Axialrichtung betrachtet, vollständig in der Umlaufnut (13) der Gewindebohrung (1) dreht.

8. Verfahren nach einem der Ansprüche 5 bis 7, **dadurch gekennzeichnet, dass** bei Erreichen der Soll-Bohrungstiefe (t_{B}) der Nutform-Vorschub (f_{N}) auf 0 reduziert wird und die Nutform-Drehzahl (n_{N}) auf 0 reduziert wird zur Vorbereitung einer für den Reversier-Hub (R) erforderlichen Drehrichtungsumkehr.

9. Verfahren nach einem der Ansprüche 5 bis 8, **dadurch gekennzeichnet, dass** beim Start des Reversier-Hubs (R) das Gewindebohr-Werkzeug (23) so angesteuert wird, dass der Gewindeprofilzahn (41, 42, 43) unter spanabhebender und/oder formender Belastung, das heißt unter Materialabtrag und/oder Materialformung, in den Gewindegang-Auslauf (11), der in die Umlaufnut (13) mündet, eingefahren wird.

10. Verfahren nach einem der vorhergehenden Ansprüche, **dadurch gekennzeichnet, dass** während des Gewindebohr-Hubes (G), des Nutform-Hubes (N) und/oder des Reversier-Hubes (R) die Rotationsachse (B) des Gewindebohr-Werkzeugs (23) und die Bohrungs-Längsachse (A) zueinander koaxial ausgerichtet sind.

11. Gewindebohr-Werkzeug zur Durchführung des Verfahrens nach einem der vorhergehenden Ansprüche, mit einem Spannschaft (24) und einem daran anschließenden Gewindebohr-Körper (26), entlang dessen Längsachse (A) sich zumindest eine Spannut (28) bis zu einer stirnseitigen Hauptschneide (27) an der Bohrerspitze (25) erstreckt, an weleher Hauptschneide (27) eine die Spannut (28) begrenzende Spanfläche (31) und eine stirnseitige Freifläche (33) der Bohrerspitze (25) zusammenlaufen, wobei in der Werkzeug-Umfangsrichtung die Spannut (28) durch zumindest einen Bohrersteg (35) begrenzt ist und die Spanfläche (31) der Spannut (28) unter Bildung einer Nebenschneide (36) in eine außenumfangsseitige Rückenfläche (37) des Bohrerstegs (35) übergeht, und wobei die Nebenschneide (36) und die stirnseitige Hauptschneide (27) an einer radial äußeren Haupt-Schneidenecke (39) zusammenlaufen, wobei an der außenumfangseitigen Rückenfläche (37) des Bohrerstegs (35) ein Gewindeprofil (29) mit zumindest einem Gewindeprofilzahn (41, 42, 43) ausgebildet ist, wobei der Gewindeprofilzahn (41, 42, 43) eine radial äußere Profilgrund-Schneid-/Formkante (45) aufweist, die die Haupt-Schneidenecke (39) radial nach außen um eine Zahnhöhe (Δr₁, Δr₂, Δr₃) überragt, **dadurch gekennzeichnet, dass** das Werkzeug-Gewindeprofil (29) zumindest einen Reversierzahn (57) aufweist, der eine Gewindeflanken-Schneid-/Formkante (59) aufweist, mittels der beim Reversier-Hub (R) das Flanken-Aufmaß (Δx) von den spänezugewandten Gewindeflanken (19) bis auf das Fertigmaß abtragbar und/oder formbar ist.

12. Gewindebohr-Werkzeug nach Anspruch 11, **dadurch gekennzeichnet, dass** der auf der Bohrersteg-Rückenfläche (37) ausgebildete Reversierzahn (57) die Haupt-Schneidenecke (39) um eine Reversier-Zahnhöhe (Δr_{R}) radial nach außen überragt, und/oder dass die Gewindeflanken-Schneidkante (59) des Reversierzahns (57) an einer radial inneren Schneiden-Innenecke (60) in eine Reversier-Schneide (61) übergeht, und dass insbesondere mittels der Reversier-Schneide (61) im Reversier-Hub (R) der Gewinde-Innenscheitel (21) bearbeitet, insbesondere entgratet, wird.

13. Gewindebohr-Werkzeug nach Anspruch 11 oder 12, **dadurch gekennzeichnet, dass** im Gewindebohr-Hub (G) der Reversierzahn (57) und/oder die Reversier-Schneide (61) funktionslos sind, und/oder dass die Gewindeprofilzähne (41, 42, 43) und/oder der Reversierzahn (57) jeweils als Formzahn (mit entsprechenden Formkanten) und/oder als Schneidzahn (mit entsprechenden spanabhebenden Schneidkanten) oder als eine Kombination daraus ausgebildet sind.

14. Gewindebohr-Werkzeug nach Anspruch 12 oder 13, **dadurch gekennzeichnet, dass** die Reversier-Schneide (61) in Bohrer-Längsrichtung verläuft, und/oder dass an der Reversier-Schneide (61) die außenumfangsseitige Bohrersteg-Rückenfläche (37) und die Spanfläche (31) der Spannut (28) zusammenlaufen, und/oder dass die Reversier-Schneide (61) und die Nebenschneide (36) an, in der Bohrer-Umfangsrichtung gegenüberliegenden Bohrersteg-Längskanten (K1, K2) ausgebildet sind.

15. Gewindebohr-Werkzeug nach Anspruch 12, 13 oder 14, **dadurch gekennzeichnet, dass** der Reversierzahn (57) und der Gewindeprofilzahn (43) über einen, auf der Bohrersteg-Rückenfläche (37) ausgebildeten Zahnsteg (63) miteinander verbunden sind, und/oder dass der Zahnsteg (63) in der Bohrer-Umfangsrichtung voneinander abgewandte Stirnseiten aufweist, die jeweils den Gewindeprofilzahn (43) und den Reversierzahn (57) bilden.

16. Gewindebohr-Werkzeug nach Anspruch 15, **dadurch gekennzeichnet, dass** der Zahnsteg (63) eine radial äußere Steg-Scheitelfläche (65) sowie eine der Bohrerspitze (25) zugewandte Steg-Flankenfläche (67) und eine der Bohrerspitze (25) abgewandte Steg-Flankenfläche (69) aufweist, und/oder dass insbesondere die Stegflächen (65, 67, 69) zumindest teilweise als Freiflächen ausgebildet sind, die im Gewindebohr-Hub (G) und/oder im Reversier-Hub (R) im Wesentlichen funktionslos sind.

17. Gewindebohr-Werkzeug nach Anspruch 15 oder 16, **dadurch gekennzeichnet, dass** die Steg-Scheitelfläche (65) an einer ersten Umfangs-Stegkante (71) in die, der Bohrerspitze (25) zugewandte Steg-Flankenfläche (67) übergeht, und/oder dass die Steg-Scheitelfläche (65) an einer zweiten Umfangs-Stegkante (72) in die, der Bohrerspitze (25) abgewandte Steg-Flankenfläche (69) übergeht, und dass insbesondere zumindest eine der beiden Umfangs-Stegkanten (71, 72) als eine Umlaufnut-Schneide (US) ausgebildet ist, mittels der im Nutform-Hub (N) die an das Bohrloch-Innengewinde (9) anschließende Umlaufnut (13) gebildet wird.

## Claims

1. Method for producing a threaded borehole (1) in a workpiece (5) with a tapping tool (23), which on its drill bit (25) has a main cutting edge (27) and a thread profile (29) lagging in a tapping direction (I), wherein the method has a tapping stroke (G), in which the tapping tool (23) is driven with a tapping feed (f_{G}) in the tapping direction (I) and with a tapping speed (n_{G}) synchronised therewith into the workpiece (5) and the tool main cutting edge (27) produces a core borehole and the tool thread profile (29) forms an internal thread (9) on the inner wall of the core borehole, and has a reversing stroke (R), in which the tapping tool (23) is guided in a reversing direction (II) out of the threaded borehole (1) with opposite reversing stroke (f_{R}) and reversing speed (n_{R}) synchronised therewith, so that the tool thread profile (29) in the thread turn (15) of the internal thread (9) is guided out of the threaded borehole (1), wherein in the tapping stroke (G) chips (51) are produced, which are extracted in a chip removal direction (S) in the opposite direction to the tapping direction (I) out of the threaded borehole (1) and thereby collide with the thread flanks (19) of the internal thread (9) facing the chips (51) to be removed, **characterised in that** in the tapping stroke (G) the thread flanks (19) of the internal thread (9) facing the chips are not yet produced to finished size, but rather are produced with a flank allowance (Δx), specifically forming a collision contour (53), with which chips (51) to be removed collide.

2. Method according to claim 1, **characterised in that** in the tapping stroke (G) the internal thread geometry, with the exception of the thread flanks (19) of the internal thread (9) facing the chips, is produced to finished size.

3. Method according to claim 1 or 2, **characterised in that** in the reversing stroke (R) a material removal takes place, in which the tool thread profile (29) guided out of the threaded borehole (1) removes and/or shapes the flank allowance (Δx) from the thread flanks (19) facing the chips up to the finished size.

4. Method according to any one of claims 1, 2 or 3, **characterised in that** in the tapping stroke (G) the tapping feed (f_{G}) and the tapping speed (n_{G}) synchronised therewith produce a tapping thread pitch (α_{G}) in the thread turn (15) of the internal thread (9), and that in the reversing stroke (R) the reversing feed (f_{R}) and the reversing speed (n_{R}) synchronised therewith produce a reversing thread pitch (α_{R}), and that in particular the reversing feed (f_{R}) and/or the reversing speed (n_{R}) is set such that a reversing thread pitch (α_{R}) is produced which in comparison to the tapping thread pitch (α_{G}) is identical or different therefrom.

5. Method according to any one of the preceding claims, **characterised in that** between the tapping stroke (G) and the reversing stroke (R) a groove shaping step takes place, in which the tapping stroke (G) is extended in the tapping direction (I) by a groove shaping stroke (N), specifically in order to form a circumferential groove (13) connected to the internal thread (9) without thread pitch, in which the thread profile (29) can rotate without a load, and/or that by the provision of the circumferential groove (13) it is moreover made possible, that the tapping tool (23) with a cutting edge (49) produces a circumferential thread reduction (7) in the borehole opening of the borehole (1), wherein the circumferential thread reduction (7) is produced during the above groove shaping step.

6. Method according to claim 5, **characterised in that** in the groove shaping step the tapping tool (23) is moved in the tapping direction (I) beyond the target thread depth (t_{G}) until reaching a target borehole depth (t_{B}), specifically with a groove shaping feed (f_{N}) and a groove shaping speed (n_{N}), which do not have to be synchronised with one another and/or are different from the tapping feed (f_{G}) and from the tapping speed (n_{G}).

7. Method according to claim 5 or 6, **characterised in that** in the groove shaping step the thread profile (29) of the tapping tool (23), viewed in the axial direction, rotates completely in the circumferential groove (13) of the threaded borehole (1).

8. Method according to any one of claims 5 to 7, **characterised in that** when the target borehole depth (t_{B}) is reached the groove shaping feed (f_{N}) is reduced to 0 and the groove shaping speed (n_{N}) is reduced to zero to prepare for a reversal of the direction of rotation required for the reversing stroke (R).

9. Method according to any one of claims 5 to 8, **characterised in that** when starting the reversing stroke (R) the tapping tool (23) is controlled such that the thread profile tooth (41, 42, 43) is driven under chip-removing and/or shaping load, that is, under material removal and/or material shaping, into the thread pitch outlet (11), which opens into the circumferential groove (13).

10. Method according to any one of the preceding claims, **characterised in that** during the tapping stroke (G), the groove shaping stroke (N) and/or the reversing stroke (R) the axis of rotation (B) of the tapping tool (23) and the borehole longitudinal axis (A) are coaxially aligned with one another.

11. Tapping tool for carrying out the method according to any one of the preceding claims, with a clamping shaft (24) and a tapping body (26) connected thereto, along the longitudinal axis (A) of which at least one chip groove (28) extends to an end-face main cutting edge (27) on the drill bit (25), on which main cutting edge (27) a chip surface (31) limiting the chip groove (28) and an end-face free surface (33) of the drill bit (25) converge, wherein in the tool circumferential direction the chip groove (28) is limited by at least one drill web (35) and the chip surface (31) of the chip groove (28) forming a secondary cutting edge (36) transitions into an outer circumferential rear surface (37) of the dill web (35), and wherein the secondary cutting edge (36) and the end-face main cutting edge (27) converge on a radially outer main cutting edge corner (39), wherein on the outer circumferential rear surface (37) of the drill web (35) a thread profile (29) is formed with at least one thread profile tooth (41, 42, 43), wherein the thread profile tooth (41, 42, 43) has a radially outer profile base-cutting-/shaping edge (45), which projects beyond the main cutting edge corner (39) radially outward by a tooth height (Δr₁, Δr₂, Δr₃), **characterised in that** the tool thread profile (29) has at least one reversing tooth (57), which has a thread flank-cutting-/shaping edge (59), by means of which in the case of the reversing stroke (R) the flank allowance (Δx) can be removed and/or can be shaped from the thread flanks (19) facing the chips up to the finished size.

12. Tapping tool according to claim 11, **characterised in that** the reversing tooth (57) formed on the drill web rear surface (37) projects beyond the main cutting edge corner (39) by a reversing tooth height (Δr_{R}) radially outward, and/or that the thread flank cutting edge (59) of the reversing tooth (57) transitions on a radially inner cutting edge inner corner (60) into a reversing cutting edge (61), and that in particular by means of the reversing cutting edge (61) in the reversing stroke (R) the thread inner crown (21) is machined, in particular deburred.

13. Tapping tool according to claim 11 or 12, **characterised in that** in the tapping stroke (G) the reversing tooth (57) and/or the reversing cutting edge (61) are functionless, and/or that the thread profile teeth (41, 42, 43) and/or the reversing tooth (57) in each case are designed as a shaping tooth (with corresponding shaping edges) and/or as a cutting tooth (with corresponding chip-removing cutting edges) or as a combination thereof.

14. Tapping tool according to claim 12 or 13, **characterised in that** the reversing cutting edge (61) extends in the drill longitudinal direction, and/or that on the reversing cutting edge (61) the outer circumferential drill web rear surface (37) and the chip surface (31) of the chip groove (28) converge, and/or that the reversing cutting edge (61) and the secondary cutting edge (36) are formed on opposite drill web longitudinal edges (K1, K2) in the drill circumferential direction.

15. Tapping tool according to claim 12, 13, or 14, **characterised in that** the reversing tooth (57) and the thread profile tooth (43) are connected with each other via a tooth web (63) formed on the drill web rear surface (37), and/or that the tooth web (63) has end faces facing away from one another in the drill circumferential direction, which in each case form the thread profile tooth (43) and the reversing tooth (57).

16. Tapping tool according to claim 15, **characterised in that** the tooth web (63) has a radially outer web crown surface (65) and a web flank surface (67) facing the drill bit (25) and a web flank surface (69) facing away from the drill bit (25), and/or that in particular, the web surfaces (65, 67, 69) are designed at least partially as free surfaces, which are substantially functionless in the tapping stroke (G) and/or in the reversing stroke (R).

17. Tapping tool according to claim 15 or 16, **characterised in that** the web crown surface (65) on a first circumferential web edge (71) transitions into the web flank surface (67) facing the drill bit (25), and/or that the web crown surface (65) on a second circumferential web edge (72) transitions into the web flank surface (69) facing away from the drill bit (25), and that in particular at least one of the two circumferential web edges (71, 72) is designed as a circumferential groove cutting edge (US), by means of which in the groove shaping stroke (N) the circumferential groove (13) connected to the borehole internal thread (9) is formed.

## Revendications

1. Procédé de production d'un trou taraudé (1) dans une pièce à usiner (5) avec un outil de taraudage (23), qui présente sur sa pointe de foret (25) une arête de coupe principale (27) et un profilé fileté (29) arrière dans une direction de taraudage (I), dans lequel le procédé présente une course de taraudage (G), dans laquelle l'outil de taraudage (23) est enfoncé dans la pièce à usiner (5) avec une avance de taraudage (f_{G}) dans la direction de taraudage (I) et avec une vitesse de rotation de taraudage (n_{G}) synchronisée avec celle-ci et l'arête de coupe principale d'outil (27) produit un avant-trou et le profilé fileté d'outil (29) forme un filet intérieur (9) sur la paroi intérieure de l'avant-trou, et présente une course inverse (R), dans laquelle l'outil de taraudage (23) est extrait du trou taraudé (1) dans une direction inverse (II) avec une avance inverse (f_{R}) opposée ainsi qu'une vitesse de rotation inverse (nᵣ) synchronisée avec celle-ci, de sorte que le profilé fileté d'outil (29) est guidé hors du trou taraudé (1) dans le pas de vis (15) du filet intérieur (9), dans lequel, dans la course de taraudage (G), des copeaux (51) sont produits, qui sont transportés hors du trou taraudé (1) dans une direction d'évacuation de copeaux (S) opposée à la direction de taraudage (I) et, dans ce cadre, entrent en collision avec les flancs de filet (19) du filet intérieur (9) tournés vers les copeaux (51) à évacuer, **caractérisé en ce que**, dans la course de taraudage (G), les flancs de filet (19), tournés vers les copeaux, du filet intérieur (9) ne sont pas encore fabriqués dans les dimensions définitives, mais sont fabriqués avec une surépaisseur de flanc (Δx), et ce avec formation d'un contour de collision (53), avec lequel les copeaux (51) à évacuer entrent en collision.

2. Procédé selon la revendication 1, **caractérisé en ce que**, dans la course de taraudage (G), la géométrie de filet intérieur, à l'exception des flancs de filet (19), tournés vers les copeaux, du filet intérieur (9), est fabriquée dans les dimensions définitives.

3. Procédé selon la revendication 1 ou 2, **caractérisé en ce que**, dans la course inverse (R), un enlèvement de matière s'effectue, pour lequel le profilé fileté d'outil (29) guidé hors du trou taraudé (1) dans la direction inverse (II) enlève et/ou façonne la surépaisseur de flanc (Δx) des flancs de filet (19) tournés vers les copeaux jusqu'aux dimensions définitives.

4. Procédé selon l'une quelconque des revendications 1, 2 ou 3, **caractérisé en ce que**, dans la course de taraudage (G), l'avance de taraudage (f_{G}) et la vitesse de rotation de taraudage (n_{G}) synchronisée avec celle-ci donnent lieu à un pas de filetage de taraudage (α_{G}) dans le pas de vis (15) du filet intérieur (9), et que, dans la course inverse (R), l'avance inverse (f_{R}) et la vitesse de rotation inverse (n_{R}) synchronisée avec celle-ci donnent lieu à un pas de filetage inverse (α_{R}), et que, en particulier, l'avance inverse (f_{R}) et/ou la vitesse de rotation inverse (n_{R}) sont réglées de sorte qu'un pas de filetage inverse (α_{R}) identique en comparaison du pas de filetage de taraudage (α_{G}), ou différent de celui-ci, est obtenu.

5. Procédé selon l'une quelconque des revendications précédentes, **caractérisé en ce qu'**une étape de rainurage s'effectue entre la course de taraudage (G) et la course inverse (R), pour laquelle la course de taraudage (G) dans la direction de taraudage (I) est prolongée d'une course de rainurage (N), et ce avec formation d'une rainure périphérique (13) se raccordant au filet intérieur (9) sans pas de filetage, dans lequel le profilé fileté (29) peut tourner sans contrainte, et/ou que la fourniture de la rainure périphérique (13) permet en outre que l'outil de taraudage (23) produise avec un bord de coupe (49) un logement fileté (7) périphérique dans l'ouverture de trou du trou (1), dans lequel le logement fileté (7) périphérique est produit pendant l'étape de rainurage mentionnée ci-dessus.

6. Procédé selon la revendication 5, **caractérisé en ce que**, à l'étape de rainurage, l'outil de taraudage (23) est déplacé dans la direction de taraudage (I) au-delà de la profondeur de filetage théorique (t_{G}) jusqu'à ce qu'une profondeur de trou théorique (t_{B}) soit atteinte, et ce avec une avance de rainurage (f_{N}) et une vitesse de rotation de rainurage (n_{N}), qui ne nécessitent pas d'être synchronisées l'une par rapport à l'autre et/ou sont différentes de l'avance de taraudage (f_{G}) et de la vitesse de rotation de taraudage (n_{G}).

7. Procédé selon la revendication 5 ou 6, **caractérisé en ce que**, à l'étape de rainurage, le profilé fileté (29) de l'outil de taraudage (23), observé dans la direction axiale, tourne entièrement dans la rainure périphérique (13) du trou taraudé (1).

8. Procédé selon l'une quelconque des revendications 5 à 7, **caractérisé en ce que**, lorsque la profondeur de trou théorique (t_{B}) est atteinte, l'avance de rainurage (f_{N}) est réduite à zéro et la vitesse de rotation de rainurage (n_{N}) est réduite à zéro pour préparer un changement de sens de rotation nécessaire à la course inverse (R).

9. Procédé selon l'une quelconque des revendications 5 à 8, **caractérisé en ce que**, lors du démarrage de la course inverse (R), l'outil de taraudage (23) est commandé de sorte que la dent de profilé fileté (41, 42, 43) est insérée dans la sortie de pas de vis (11), qui débouche dans la rainure périphérique (13), avec sollicitation par enlèvement de copeaux et/ou façonnage, c'est-à-dire avec enlèvement de matière et/ou façonnage de matière.

10. Procédé selon l'une quelconque des revendications précédentes, **caractérisé en ce que**, pendant la course de taraudage (G), la course de rainurage (N) et/ou la course inverse (R), l'axe de rotation (B) de l'outil de taraudage (23) et l'axe longitudinal de trou (A) sont orientés de manière coaxiale les uns par rapport aux autres.

11. Outil de taraudage pour la mise en œuvre du procédé selon l'une quelconque des revendications précédentes, avec une tige de serrage (24) et un corps de trou taraudé (26) se raccordant à celle-ci, le long de l'axe longitudinal (A) duquel au moins une goujure (28) s'étend jusqu'à une arête de coupe principale (27) frontale sur la pointe de foret (25), arête de coupe principale (27) sur laquelle une face de coupe (31) délimitant la goujure (28) et une face de dépouille (33) frontale de la pointe de foret (25) convergent, dans lequel, dans la direction périphérique d'outil, la goujure (28) est délimitée par au moins une âme de foret (35) et la face de coupe (31) de la goujure (28) se prolonge en une face de dépouille complémentaire (37), côté périphérie extérieure, de l'âme de foret (35), avec formation d'une arête de coupe secondaire (36), et dans lequel l'arête de coupe secondaire (36) et l'arête de coupe principale (27) frontale convergent sur un bec principal (39) radialement extérieur, dans lequel un profilé fileté (29) avec au moins une dent de profilé fileté (41, 42, 43) est réalisé sur la face de dépouille complémentaire (37), côté périphérie extérieure, de l'âme de foret (35), dans lequel la dent de profilé fileté (41, 42, 43) présente un bord de coupe/façonnage de base de profilé (45) radialement extérieur, qui fait saillie radialement vers l'extérieur d'une hauteur de dent (Δr₁, Δr₂, Δr₃) du bec principal (39), **caractérisé en ce que** le profilé fileté d'outil (29) présente au moins une dent inverse (57), qui présente un bord de coupe/façonnage de flanc de filet (59), au moyen duquel, lors de la course inverse (R), la surépaisseur de flanc (Δx) des flancs de filet (19) tournés vers les copeaux peut être enlevée et/ou façonnée jusqu'aux dimensions définitives.

12. Outil de taraudage selon la revendication 11, **caractérisé en ce que** la dent inverse (57) réalisée sur la face de dépouille complémentaire (37) d'âme de foret fait saillie, radialement vers l'extérieur, du bec principal (39) d'une hauteur de dent inverse (Δr_{R}), et/ou que le bord de coupe de flanc de filet (59) de la dent inverse (57) se prolonge, au niveau d'un coin intérieur de coupe (60) radialement intérieur, en une arête de coupe inverse (61), et que, en particulier, le sommet intérieur de filet (21) est usiné, en particulier ébavuré, au moyen de l'arête de coupe inverse (61) dans la course inverse (R).

13. Outil de taraudage selon la revendication 11 ou 12, **caractérisé en ce que**, dans la course de taraudage (G), la dent inverse (57) et/ou l'arête coupante inverse (61) sont non fonctionnelles, et/ou que les dents de profilé fileté (41, 42, 43) et/ou la dent inverse (57) sont réalisées respectivement en tant que dent de façonnage (avec des bords de façonnages correspondants) et/ou en tant que dent de coupe (avec des bords de coupe par enlèvement de copeaux correspondants) ou en tant qu'une combinaison de celles-ci.

14. Outil de taraudage selon la revendication 12 ou 13, **caractérisé en ce que** l'arête de coupe inverse (61) s'étend dans la direction longitudinale de foret, et/ou que la face de dépouille complémentaire d'âme de foret (37) côté périphérie extérieure et la face de coupe (31) de la goujure (28) convergent sur l'arête de coupe inverse (61), et/ou que l'arête de coupe inverse (61) et l'arête de coupe secondaire (36) sont réalisées sur des bords longitudinaux d'âme de foret (K1, K2) opposés dans la direction périphérique de foret.

15. Outil de taraudage selon la revendication 12, 13 ou 14, **caractérisé en ce que** la dent inverse (57) et la dent de profilé fileté (43) sont reliées l'une à l'autre par l'intermédiaire d'une nervure de dent (63) réalisée sur la face de dépouille complémentaire d'âme de foret (37), et/ou que la nervure de dent (63) présente des faces frontales opposées les unes aux autres dans la direction périphérique de foret, qui forment respectivement la dent de profilé fileté (43) et la dent inverse (57).

16. Outil de taraudage selon la revendication 15, **caractérisé en ce que** la nervure de dent (63) présente une surface de sommet de nervure (65) radialement extérieure ainsi qu'une surface de flanc de nervure (67) tournée vers la pointe de foret (25) et une surface de flanc de nervure (69) opposée à la pointe de foret (25), et/ou qu'en particulier les faces de nervure (65, 67, 69) sont réalisées au moins en partie en tant que faces de dépouille, qui sont sensiblement non fonctionnelles dans la course de taraudage (G) et/ou dans la course inverse (R).

17. Outil de taraudage selon la revendication 15 ou 16, **caractérisé en ce que** la surface de sommet de nervure (65), sur un premier bord de nervure périphérique (71), se prolonge en la face de flanc de nervure (67) tournée vers la pointe de foret (25), et/ou que la surface de sommet de nervure (65), sur un second bord de nervure périphérique (72), se prolonge en la surface de flanc de nervure (69) opposée à la pointe de foret (25), et qu'en particulier au moins un des deux bords de nervure périphériques (71, 72) est réalisé en tant qu'arête de coupe de rainure périphérique (US), au moyen de laquelle la rainure périphérique (13) se raccordant au filet intérieur d'avant-trou (9) est formée dans la course de rainurage (N).
